# EUROPÄISCHE PATENTSCHRIFT

(11) **EP 0 272 741 B1**
(45) Veröffentlichungstag und Bekanntmachung des Hinweises auf die Patenterteilung: **10.11.1993**
(21) Anmeldenummer: 87202476.5
(22) Anmeldetag: 10.12.1987
(51) Int. Cl.: H04M 1/72

(54) **Schaltungsanordnung zum Verbindungsaufbau und Überwachung bei einem schnurlosen Telefonapparat**
Circuit arrangement for connection and control in a cordless telephone
Circuit pour la réalisation et pour le contrôle de la connexion dans un poste téléphonique sans cordon

(30) Priorität: 17.12.1986 DE 3643004
(43) Veröffentlichungstag der Anmeldung: 29.06.1988
(73) Patentinhaber: Philips Patentverwaltung GmbH, 22335 Hamburg (DE); Philips Electronics N.V., 5621 BA Eindhoven (NL)
(72) Erfinder: Bauer, Peter, D-8510 Fürth (DE)
(74) Vertreter: Peuckert, Hermann, Dipl.-Ing.

(56) Entgegenhaltungen:
- PATENT ABSTRACTS OF JAPAN, Band 9, Nr. 19 (E-292)[1742], 25. Januar 1985 & JP-A-59 165 539
- NACHRICHTENTECHNISCHE ZEITSCHRIFT N.T.Z., Band 38, Nr. 7, Juli 1985, Seiten 468-471, Berlin, DE; H.P. BAUER: "Schnurloses Telefon für den 900-MHz-Bereich"

## Beschreibung

Die Erfindung betrifft einen schnurlosen Telefonapparat gemäß dem Oberbegriff des Patentanspruchs 1.

Bei Fernsprechapparaten besteht in der Regel über ein Kabel von einigen Metern Länge eine Verbindung zum jeweiligen Fernsprechanschluß. Die Verbindung zwischen dem Hörer und dem Fernsprechapparat über die Telefonapparateschnur ist noch wesentlich kürzer. Dadurch ist der Benutzer beim Telefonieren an einen bestimmten Ort gebunden und kann sich während des Gespräches kaum vom jeweiligen Ort entfernen.

Eine gewisse Verbesserung brachten sogenannte Freisprecheinrichtungen, die es dem Benutzer erlauben, sich während des Gesprächs einige Meter im Raum frei zu bewegen.

Um den Bewegungsbereich des Benutzers noch mehr zu erweitern, werden in verschiedenen Ländern zunehmend sogenannte schnurlose Telefonapprate (cordless telephone) eingesetzt. Die Informationsübertragung zwischen einer Basisstation und der zugehörigen Mobilstation des schnurlosen Telefonapparats erfolgt über ein Funkübertragungskanalpaar. Die Basisstation wird mittels einer Verbindungsdose an einen Hauptanschluß oder an eine Nebenstellenanlage angeschlossen, so daß für den Benutzer der Zugang zum öffentlichen Fernsprechnetz gegeben ist.

Dadurch, daß die Basisstation und die Mobilstation über einen Funkübertragungskanal miteinander in Verbindung stehen, ist der Bewegungsbereich des Benutzers auf einen Umkreis bis zu 200 m zum jeweiligen Anschluß (Verbindungsdose) erweitert.

In der Bundesrepublik Deutschland stehen für die Informationsübertragung 40 Funkkanäle zur Verfügung, welche im Frequenzbereich von 900 MHz liegen. Mit der obengenannten Übertragungsreichweite ergibt sich für die Belegung des gleichen Funkkanals durch zueinander benachbarte schnurlose Telefonapparate eine geringe Belegtwahrscheinlichkeit. Liegt ein Verbindungswunsch vor, so wird von einer im Empfänger von Mobilstation und Basisstation angeordneten Sendersuchlaufeinrichtung ein Suchlauf nach einem freien Funkübertragungskanal gestartet und das Funkübertragungskanalpaar belegt. Um sicherzustellen, daß die zwischen den beiden Stationen des schnurlosen Telefonapparats übertragenen Nachrichten von keinem anderen schnurlosen Telefonapparat mitgehört werden können, daß die Gebührenzuordnung sichergestellt ist und daß die Zuordnung der Funkübertragungskanalpaare eindeutig ist, ist jedem schnurlosen Telefonapparat eine Kennung zugeordnet, welche von der Anschlußnummer des Fernsprechteilnehmers unabhängig ist.

Bei der Basisstation löst ein von der zugehörigen Steuereinrichtung erkannter ankommender Ruf auf der Amtsleitung die Funkkanalsuche aus. In der Mobilstation wird die Funkkanalsuche durch Betätigen der Gabelumschalt-Taste eingeleitet. In der EP-B1 0 074 940 ist die Funkkanalsuche und der beim Funkverbindungsaufbau durchgeführte Kennungsaustausch näher beschrieben und erläutert. Ein als frei erkannter Funkübertragungskanal wird belegt, der Sender aktiviert und die Kennung als Datentelegramm über den Funkübertragungskanal gesendet. Nach dem Senden jeder Kennung wird auf ein Quittungstelegramm, d.h. der Kennung, der entsprechenden Gegenstation gewartet. Wird die Kennung (Quittungstelegramm) der Gegenstation empfangen, so wird diese von einer in den jeweiligen Stationen angeordneten Einrichtung mit der eigenen Kennung verglichen. Bei Übereinstimmung wird von der mit der Einrichtung verbundenen Steuereinrichtung die Verbindung durchgeschaltet, die Kennungsausgabe eingestellt und die bestehende Funkverbindung überwacht.

In ntz, Band 38 (1985), Heft 7, Seiten 468 bis 471 ist ein schnurloses Telefon für den 900 MHz-Bereich beschrieben. Auf Seite 468 ist angegeben, daß die 40 Funkübertragungskanäle automatisch verwaltet werden und daß in der Basisstation im Ruhezustand nacheinander alle 40 Funkkanäle abgesucht werden, um zu erkennen, wenn im Falle des Anrufs eine Anforderung von der Mobilstation für den Verbindungsaufbau vorliegt. Die Kanalabfrage erfolgt zyklisch, wobei zunächst geprüft wird, ob der gerade abgefragte Funkübertragungskanal belegt ist und falls dies nicht zutrifft, wird dieser Funkübertragungskanal als frei notiert und nachfolgend wird die Umschaltung auf den im Zyklus nächsten Funkübertragungskanal vorgenommen.

Auf Seite 470 ist angegeben, daß während des Gesprächs alle 15 Sekunden ein Kennungsaustausch stattfindet. Während dieses Kennungsaustausches ist kurzzeitig die Sprachübertragung unterbrochen und die Übertragung der Kennung ist in der Austastlücke leise zu hören. Auf Seite 470 ist in Tabelle 2, Absatz 3 sowie in der rechten Spalte, unten angegeben, daß in dem Fall, indem sich der Benutzer eines schnurlosen Telefonapparats im Gesprächszustand aus dem Funkversorgungsbereich herausbewegt, das Unterschreiten der zulässigen minimalen Feldstärke eine Fehlermeldung erzeugt. Falls der Benutzer weiterhin außerhalb des Funkversorgungsbereichs bleibt, so wird nach 10 Sekunden die Verbindung automatisch abgebrochen.

Aus Patent Abstracts of Japan, Band 9, Nr. 19 (E-292) [1742], 25. Januar 1985; & JP-A-59 165 539 (Mitsubishi Denki K.K.) 18-09-1984 ist ein Mobilfunkübertragungssystem mit einer Mobilstation und einer Basisstation bekannt, bei dem ein Testsignal von einem Signaloszillator der Mobilstation zur Basisstation gesendet wird. Das Testsignal wird von der Basisstation demoduliert und anschließend ein in der Basisstation vorgesehender Signaloszillator aktiviert, der ein Testquittungssignal liefert. Dieses wird an die Mobilstation gesendet und in der Mobilstation demoduliert. Hierdurch wird ein Testquittungssignalempfänger und eine Signalisierungslampe aktiviert.

Weiterhin ist in der nicht vorveröffentlichten deutschen Patentanmeldung mit dem amtlichen Aktenzeichen P 35 45 572.1 ein Verfahren zum Kennungsaustausch während des Gesprächs angegeben, welches zu keiner Gesprächsunterbrechung führt. Der während des Gesprächs stattfindende unhörbare Kennungsaustausch erfolgt durch Übertragen der Kennung als nichthörbare Außerband-Signalisierung. Die hierfür erforderliche Umschaltung von Inband-Signalisierung auf nichthörbare Außerband-Signalisierung wird von den in beiden Stationen angeordneten Steuereinrichtungen durchgeführt.

Weiterhin ist aus Technische Mitteilungen PTT, Nr. 4, 1986, Seiten 152 bis 165 ein schnurloser Telefonapparat bekannt, bei dem ebenfalls zur Sicherstellung der Zuordnung beider Stationen ein Kennungsaustausch vorgenommen wird. Auf Seite 157 ist die Verbindungsüberwachung näher beschrieben und erläutert. Sinkt die Kanalqualität mehr als 500 ms unter einem Wert, welcher einem Geräuschabstand von 20 dB entspricht, so wird der Benutzer durch eine in der Mobilstation befindliche Anzeigeeinrichtung akustisch gewarnt. Sollte sich die Empfangsqualität in den nächsten 10s nicht verbessern, z.B. durch eine Standortveränderung, so wird die Funkverbindung automatisch ausgelöst. Beim Verbindungsaufbau wird die Kennung, wie vorstehend geschildert, alle 15s gesendet und von der Gegenstation quittiert. Falls das Quittungssignal z.B. zweimal innerhalb von 35s fehlerhaft ist oder nicht empfangen wird, wird ebenfalls die Funkverbindung automatisch wieder ausgelöst.

Die vorstehend geschilderten Verfahren zum Verbindungsaufbau und zur Verbindungsüberwachung bei einem schnurlosen Telefonapparat setzen voraus, daß ein Verbindungsaufbau zu einem Fernsprechteilnehmer durchgeführt worden ist. Sie zeigen jedoch keine Möglichkeit dahingehend auf, wie auch bei einer nichtbestehenden Telefonverbindung überprüft werden kann, ob sich der Benutzer noch im Funkversorgungsbereich befindet, z.B. wenn er die Mobilstation mit sich trägt und er jederzeit telefonisch erreichbar sein will.

Der Erfindung liegt die Aufgabe zugrunde, einen schnurlosen Telefonapparat der eingangs genannten Art anzugeben, mit dem insbesondere bei einer nichtbestehenden Telefonverbindung auf einfache Art und Weise überprüft werden kann, ob sich der Benutzer noch im Funkversorgungsbereich befindet.

Diese Aufgabe wird bei einem schnurlosen Telefonapparat der eingangs genannten Art durch die im kennzeichnenden Teil des Anspruchs 1 angegebenen Merkmale gelöst.

Ein derartiger schnurloser Telefonapparat weist den Vorteil auf, daß auf überraschend einfache Art und Weise eine Überprüfung des Funkversorgungsbereichs durch den Benutzer durchgeführt werden kann.

Vorteilhafte Ausgestaltungsformen der Erfindung sind in den Unteransprüchen enthalten.

Wird gemäß Patentanspruch 5 nach Empfang des Quittungssignals in der Mobilstation die Funkverbindung wieder ausgelöst, so entfällt die Verbindungsdurchschaltung zum öffentlichen Fernsprechnetz, so daß auch keine Gesprächsgebühren anfallen.

Die schaltungstechnische Realisierung des schnurlosen Telefonapparate erfordert einen geringen zusätzlichen Schaltungsaufwand in Form eines in jeder Station angeordneten Codespeichers, da die weiteren Einrichtungen des schnurlosen Telefonapparats mitbenutzt werden können.

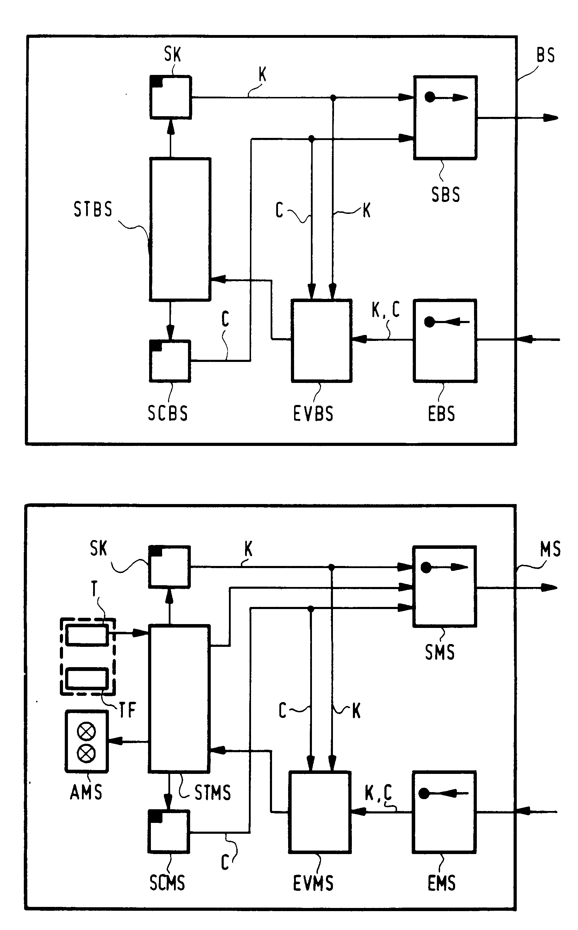

Die Erfindung wird im folgenden anhand einer in der Zeichnung dargestellten Ausführungsform näher beschrieben und erläutert.

In Mobilstation MS und Basisstation BS ist jeweils im Empfänger EMS, EBS eine Sendersuchlaufeinrichtung angeordnet, welche aus einer Anzahl von vorgegebenen Funkübertragungskanalpaaren einen freien Funkübertragungskanal auswählt. Zum Funkverbindungsaufbau wird vom Sender SMS bzw. SBS über den freien Funkübertragungskanal zum Empfänger EBS bzw. EMS der Gegenstation eine dem schnurlosen Telefonapparat zugeordnete Kennung K übertragen. Diese Kennung K ist im Kennungsspeicher SK, welcher in der Basisstation BS bzw. Mobilstation MS angeordnet ist, gespeichert. Mobilstation MS und Basisstation BS weisen jeweils Empfänger EMS bzw. EBS auf, welche mit einer Einrichtung EVMS bzw. EVBS zur Erfassung und zum Vergleichen der Kennungen K verbunden sind. Bei Übereinstimmung der Kennungen wird die Verbindung zum öffentlichen Fernsprechnetz durchgeschaltet.

Zur Überwachung des Funkversorgungsbereichs ist in der Mobilstation MS und der Basisstation BS jeweils ein Codespeicher SCMS bzw. SCBS angeordnet, welcher jeweils mit einer Steuereinrichtung STMS bzw. STBS, den Einrichtungen EVMS bzw. EVBS und den Sendern SMS bzw. SBS verbunden ist.

Beim erfindungsgemäßen schnurlosen Telefonapparat kann zur Überwachung des Funkversorgungsbereichs, vom Sender EMS der Mobilstation MS über den freien Funkübertragungskanal zum Empfänger EBS zusätzlich zur Kennung K ein Code C übertragen werden. In der mit dem Empfänger EBS verbundenen Einrichtung EVBS wird der empfangene Code C mit dem im Codespeicher SCBS der Basisstation BS gespeicherten Code C verglichen. Bei Codeübereinstimmung wird der Code C, gesteuert durch die Steuereinrichtung STBS der Basisstation BS, vom Sender SBS über den Funkübertragungskanal als Quittungssignal zur Mobilstation MS zurückübertragen. Der im Empfänger EMS der Mobilstation MS empfangene Code C wird in der mit dem Empfänger EMS verbundenen Einrichtung EVMS mit dem gesendeten Code C verglichen und bei Codeübereinstimmung wird, gesteuert durch die Steuereinrichtung STMS, die aufgebaute Funkverbindung wieder ausgelöst.

In der Mobilstation MS wird die Codeübertragung durch Drücken einer Taste T eingeleitet und das Fehlen des zurückübertragenen Codes C wird in der Mobilstation MS von einer Anzeigeeinrichtung AMS optisch und/oder akustisch angezeigt.

Durch den erfindungsgemäßen schnurlosen Telefonapparat wird nicht nur der Bedienungskomfort für den Benutzer des schnurlosen Telefonapparats erhöht, sondern zusätzlich ist auf einfache Art und Weise eine Überprüfung des Funkversorgungsbereichs möglich. Dabei ist es nicht notwendig das Postnetz zu verwenden, beziehungsweise einen Leitungswähler zu belegen.

## Patentansprüche

1. Schnurloser Telefonapparat (MS, BS) mit einer Basisstation (BS) und mit mindestens einer Mobilstation (MS), wobei die Basisstation (BS) und die Mobilstation (MS) jeweils einen Empfänger (EMS, EBS) und jeweils einen Sender (SMS, SBS) aufweisen, und wobei der schnurlose Telefonapparat (MS, BS) eine erste Überwachungseinrichtung zur Überwachung des Verbindungsaufbaus aufweist, die zur Übertragung einer Kennung (K) vom Sender (SMS, SBS) zum Empfänger (EBS, EMS) der Gegenstation vorgesehen ist,
dadurch gekennzeichnet,
daß der schnurlose Telefonapparat (MS, BS) eine zweite Überwachungseinrichtung zur Überwachung des Funkversorgungsbereichs auch bei nicht bestehender Telefonverbindung aufweist, die zur Übertragung eines Codes (C) vom Sender (SMS, SBS) zum Empfänger (EBS, EMS) der Gegenstation und zur Übertragung eines Quittungssignals (C) vom Sender (SBS, SMS) der Gegenstation zum Empfänger (EMS, EBS) vorgesehen ist.

2. Schnurloser Telefonapparat nach Anspruch 1,
dadurch gekennzeichnet,
daß der schnurlose Telefonapparat (MS, BS) eine Steuereinrichtung (STMS, STBS), eine Vergleichseinrichtung (EVMS, EVBS) und einen Codespeicher (SCMS, SCBS) aufweist, wobei die Vergleichseinrichtung (EVMS, EVBS) zum Vergleich des empfangenen Codes (C) mit einem im Codespeicher (SCMS, SCBS) gespeicherten Code und die Steuereinrichtung (STMS, STBS) zur Steuerung und zur Auslösung einer Funkverbindung zwischen Mobilstation (MS) und Basisstation (BS) zur Überwachung des Funkversorgungsbereichs vorgesehen sind.

3. Schnurloser Telefonapparat nach einem der Ansprüche 1 oder 2,
dadurch gekennzeichnet,
daß der schnurlose Telefonapparat (MS, BS) zur Speicherung der dem schnurlosen Telefonapparat zugeordneten Kennung (K) einen Kennungsspeicher (KC) aufweist, wobei die Kennung (K) zur Übertragung vom Sender (SBS, SMS) zum Empfänger (EMS, EBS) der Gegenstation und die Vergleichseinrichtung (EVMS, EVBS) der Empfänger (EMS, EBS) zur Erfassung und zum Vergleichen der empfangenen Kennung (K) mit der gespeicherten Kennung (K) vorgesehen ist.

4. Schnurloser Telefonapparat nach einem der Ansprüche 1 bis 3,
dadurch gekennzeichnet,
daß die Überwachungseinrichtungen zur Übertragung des Codes (C) zusätzlich zur Kennung (K) über einen freien Funkübertragungskanal vom Sender (SMS, SBS) zum Empfänger (EMS, EBS) der Gegenstation und zur Rückübertragung des Quittungssignals über den rückgerichteten Funkübertragungskanal vom Sender (SMS, SBS) der Gegenstation zum Empfänger (EBS, EMS) vorgesehen ist.

5. Schnurloser Telefonapparat nach einem der Ansprüche 1 bis 4,
dadurch gekennzeichnet,
daß der schnurlose Telefonapparat (MS, BS) zur Einleitung der Übertragung des Codes (C) eine Taste (T) aufweist, wobei die Steuereinrichtung (STMS, STBS) zur Auslösung der Funkverbindung nach Empfang des Quittungssignals (C) vorgesehen ist.

6. Schnurloser Telefonapparat nach einem der Ansprüche 1 bis 5,
dadurch gekennzeichnet,
daß der schnurlose Telefonapparat (MS, BS) eine Anzeigeeinrichtung (AMS) zur Anzeige des Quittungssignals (C) und/oder zur Anzeige des Fehlens des Quittungssignals (C) aufweist.

7. Schnurloser Telefonapparat nach einem der Ansprüche 1 bis 6,
dadurch gekennzeichnet,
daß als Quittungssignal der Code (C) vorgesehen ist.

8. Schnurloser Telefonapparat nach einem der Ansprüche 1 bis 7,
dadurch gekennzeichnet,
daß die Empfänger (EMS, EBS) von Mobilstation (MS) und Basisstation (BS) jeweils eine Sendersuchlaufeinrichtung aufweisen, die zur Auswahl eines freien Funkübertragungskanals aus einer Anzahl von vorgegebenen Funkübertragungskanalpaaren vorgesehen ist.

9. Schnurloser Telefonapparat nach einem der Ansprüche 1 bis 7,
dadurch gekennzeichnet,
daß die Steuereinrichtung (STMS, STBS) jeweils mit der Vergleichseinrichtung (EVMS, EVBS) und dem Codespeicher (SCMS, SCBS) verbunden ist, wobei die Steuerungseinrichtung (STMS, STBS) zur Steuerung des Verbindungsaufbaus und zur Überwachung des Funkversorgungsbereichs vorgesehen ist.

10. Mobilstation (MS) und/oder Basisstation (BS) für einen schnurlosen Telefonapparat nach einem der Ansprüche 1 bis 9.

## Claims

1. Cordless telephone set (MS, BS) including a fixed station (BS) and at least a mobile station (MS), the fixed station (BS) and the mobile station (MS) comprising each a receiver (EMS, EBS) and a transmitter (SMS, SBS), and a cordless telephone set (MS, BS) including a first monitoring arrangement for monitoring the connection set up, which is provided for transmitting a identification number (K) from the transmitter (SMS, SBS) to the receiver (EBS, EMS) of the opposite station, characterized in that the cordless telephone set (MS, BS) comprises a second monitoring arrangement for monitoring the radio coverage area even if no telephone connection has been established, which is provided for transmitting a code (C) from the transmitter (SMS, SBS) to the receiver (EBS, EMS) of the opposite station and for transmitting an acknowledgement signal (C) from the transmitter (SBS, SMS) of the opposite station to the receiver (EMS, EBS).

2. Cordless telephone set as claimed in Claim 1, characterized in that the cordless telephone set (MS, BS) comprises a control arrangement (STMS, STBS), a comparing arrangement (EVMS, EVBS) and a code store (SCMS, SCBS), the comparing arrangement (EVMS, EVBS) being provided for comparing the received code (C) with a code stored in the code store (SCMS, SCBS) and the control arrangement (STMS, STBS) being provided for controlling and attempting establishing a radio connection between mile station (MS) and fixed station (BS) to monitor the radio coverage area.

3. Cordless telephone set as claimed in one of the Claims 1 or 2, characterized in that the cordless telephone set (MS, BS) comprises an identification number store (KC) for storing the identification number (K) assigned to the cordless telephone set, the identification number (K) being provided for transmitting from the transmitter (SBS, SMS) to the receiver (EMS, EBS) of the opposite station and the comparing arrangement (EVMS, EVBS) of the receiver (EMS, EBS) being provided for scanning and comparing the received identification number (K) with the stored identification number (K).

4. Cordless telephone set as claimed in one of the Claims 1 to 3, characterized in that the monitoring arrangements are provided for transmitting the code (C) in addition to the identification number (K) through a idle radio transmission channel from the transmitter (SMS, SBS) to the receiver (EMS, EBS) of the opposite station and for transmitting back the acknowledgement signal through the return radio transmission channel from the transmitter (SMS, SBS) of the opposite station to the receiver (EBS, EMS).

5. Cordless telephone set as claimed in one of the Claims 1 to 4, characterized in that the cordless telephone set (MS, BS) comprises a key (T) for initiating the transmission of the code (C), the control arrangement (STMS, STBS) being provided for attempting to establish radio contact upon reception of the acknowledgement signal (C).

6. Cordless telephone set as claimed in one of the Claims 1 to 5, characterized in that the cordless telephone set (MS, BS) comprises an annunciating means (AMS) for annunciating the acknowledgement signal (C) and/or for annunciating the lack of the acknowledgement signal (C).

7. Cordless telephone set as claimed in one of the Claims 1 to 6, characterized in that the code (C) is provided as a acknowledgement signal.

8. Cordless telephone set as claimed in one of the Claims 1 to 7, characterized in that the receivers (EMS, EBS) of the mobile station (MS) and the fixed station (BS) comprise each a station searcher which is provided for selecting an idle radio transmission channel from a plurality of given pairs of radio transmission channels.

9. Cordless telephone set as claimed in one of the Claims 1 to 7, characterized in that the control arrangements (STMS, STBS) are connected each to the comparing arrangement (EVMS, EVBS) and the code store (SCMS, SCBS), the control arrangement (STMS, STBS) Being provided for controlling the connection set up and for monitoring the radio coverage area.

10. Mobile station (MS) and/or fixed station (BS) for a cordless telephone set as claimed in one of the Claims 1 to 9.

## Revendications

1. Poste téléphonique sans cordon (MS, BS), comportant une station de base (BS) et avec au moins une station mobile (MS), où la station de base (BS) et la station mobile (MS) présentent chacune un récepteur (EMS, EBS) et chacune un émetteur (SMS, SBS), et où le poste téléphonique sans cordon (MS, BS) présente un premier dispositif de surveillance pour la surveillance de l'établissement de la liaison, qui est prévu pour la transmission d'une identification (K) depuis l'émetteur (SMS, SBS) vers le récepteur (EBS, EMS) de l'autre station, caractérisé en ce que le poste téléphonique sans cordon (MS, BS) présente un second dispositif de surveillance pour la surveillance de la zone de couverture radio également dans le cas d'une liaison téléphonique inexistante, qui est prévu pour la transmission d'un code (C) depuis l'émetteur (SMS, SBS) vers le récepteur (EBS, EMS) de l'autre station opposée et pour la transmission d'un signal d'accusé réception (C) depuis l'émetteur (SBS, SMS) de l'autre station vers le récepteur (EMS, EBS).

2. Poste téléphonique sans cordon suivant la revendication 1, caractérisé en ce que le poste téléphonique sans cordon (MS, BS) présente un dispositif de commande (STMS, STBS), un dispositif de comparaison (EVMS, EVBS) et une mémoire de code (SCMS, SCBS), le dispositif de comparaison (EVMS, EVBS) étant prévu pour la comparaison du code reçu (C) avec un code stocké dans la mémoire de code (SCMS, SCBS) et le dispositif de commande (STMS, STBS), pour la commande et pour l'interruption d'une liaison radio entre la station mobile (MS) et la station de base (BS) pour la surveillance de la zone de couverture radio.

3. Poste téléphonique sans cordon suivant l'une quelconque des revendications 1 et 2, caractérisé en ce que le poste téléphonique sans cordon (MS, BS) présente une mémoire d'identification (KC) pour le stockage de l'identification (K) associée au poste téléphonique sans cordon, l'identification (K) étant prévue pour être transmise depuis l'émetteur (SBS, SMS) vers le récepteur (EMS, EBS) de l'autre station opposée et le dispositif de comparaison (EVMS, EVBS) du récepteur (EMS, EBS) étant prévu pour l'acquisition de l'identification (K) roue et pour sa comparaison l'identification (K) stockée.

4. Poste téléphonique sans cordon suivant l'une quelconque des revendications 1 à 3, caractérisé en ce que les dispositifs de surveillance sont prévus pour la transmission du code (C) en plus de l'identification (K) sur un canal de transmission radio libre depuis l'émetteur (SMB, SBS) vers le récepteur (EMS, EBS) de l'autre station et pour la transmission en retour du signal d'accusé réception sur le canal de transmission radio dirigé en retour depuis l'émetteur (SMS, SBS) de l'autre station vers le récepteur (EBS, EMS).

5. Poste téléphonique sans cordon suivant l'une quelconque des revendications 1 à 4, caractérisé en ce que le poste téléphonique sans cordon (MS, BS) présente une touche (T) pour initier la transmission du code (C), le dispositif de commande (STMS, STBS) étant prévu pour le déclenchement de la liaison radio après la réception du signal d'accusé réception (C).

6. Poste téléphonique sans cordon suivant l'une quelconque des revendications 1 à 5, caractérisé en ce que le poste téléphonique sans cordon (MS, BS) présente un dispositif avertisseur (AMS) pour avertir de la présence du signal d'accusé réception (C) et/ou de l'absence du signal d'accusé réception (C).

7. Poste téléphonique sans cordon suivant l'une quelconque des revendications 1 à 6, caractérisé en ce que le code (C) est prévu comme signal d'accusé réception.

8. Poste téléphonique sans cordon suivant l'une quelconque des revendications 1 à 7, caractérisé en ce que les récepteurs (EMS, EBS) de la station mobile (MS) et de la station de base (BS) présentent chacun un dispositif de recherche d'émetteur, qui est prévu pour la sélection d'un canal de transmission radio libre parmi un certain nombre de paires de canaux de transmission radio prédéterminées.

9. Poste téléphonique sans cordon suivant l'une quelconque des revendications 1 à 7, caractérisé en ce que le dispositif de commande (STMS, STBS) est chaque fois connecté au dispositif de comparaison (EVMS, EVBS) et à la mémoire de code (SCMS, SCBS), le dispositif de commande (STMS, STBS) étant prévu pour la commande de l'établissement de la liaison et la surveillance de la zone de couverture radio.

10. Station mobile (MS) et/ou station de base (BS) pour un poste téléphonique sans cordon suivant l'une quelconque des revendications 1 à 9.
